(19) Europäisches Patentamt
European Patent Office
Office européen des brevets

(11) EP 0 657 038 B1

(12) **EUROPEAN PATENT SPECIFICATION**

(45) Date of publication and mention
of the grant of the patent:
**06.10.1999 Bulletin 1999/40**

(21) Application number: 94920734.4

(22) Date of filing: 15.06.1994

(51) Int Cl.6: **G02B 9/16**, G02B 9/32

(86) International application number:
**PCT/US94/06706**

(87) International publication number:
**WO 95/01581 (12.01.1995 Gazette 1995/03)**

(54) **A COMPACT OBJECTIVE LENS SYSTEM**

KOMPAKTES OBJEKTIVLINSENSYSTEM

OBJECTIF COMPACT

(84) Designated Contracting States:
DE FR GB

(30) Priority: 29.06.1993 US 84387
29.06.1993 US 84380

(43) Date of publication of application:
**14.06.1995 Bulletin 1995/24**

(73) Proprietor: **EASTMAN KODAK COMPANY**
**Rochester, New York 14650 (US)**

(72) Inventors:
• **ESTELLE, Lee, Roy**
**Rochester, NY 14617 (US)**
• **GOOSEY, William, Thomas, Jr.**
**Fairport, NY 14450 (US)**

(74) Representative: **Mackett, Margaret Dawn et al**
**Kodak Limited**
**Patent Department**
**Headstone Drive**
**Harrow, Middlesex HA1 4TY (GB)**

(56) References cited:
US-A- 4 415 241      US-A- 4 620 775
US-A- 4 836 665      US-A- 4 886 342

• PATENT ABSTRACTS OF JAPAN vol. 10, no. 26
(P-425) 31 January 1986 & JP,A,60 177 313
(NIHON KOUGAKU KOGYO K.K.)

**Description**

**Technical Field**

The present invention relates to a lens system suitable for use as an objective or taking lens for compact photographic cameras and providing a field coverage of at least 55 degrees and preferably 60 degrees or higher.

**Background Art**

With the increasing demand for manufacturing smaller, more compact photographic cameras at a lower cost, there is an increased need for use of smaller and less costly lens systems. Triplet or a Tessar-type lens systems are good candidates for such use because these systems have relatively few lens elements.

Triplet-type or triplet derivatives such as Tessar-type lenses have been used in photographic apparatus for many years. Moreover, the objectives having a triplet-type lens system with the diaphragm arranged either in front of the first lens element or behind the last lens element are also well known, and such lens systems are disclosed in U. S. 3,910,685, U.S. 4,886,342, U.S. 4,892,398, U.S. 4,676,607, U.S. 3,967,884, U.S. 3,895,857 and U.S. 3,784,287. Such objectives have an advantage of being compact, having relatively few lens elements and eliminating the costs of "split" barrels.

However, many of these lens systems are assembled in their optical barrels with spacers such as spacer rings or shims placed between the optical components. This is disadvantageous because the spacers may cause tolerance build-up on thicknesses as well as tolerance build-ups due to spacer wedge. In addition, there is an increased cost due to extra parts.

The need for the spacers or shims can be eliminated when the elements are made of plastic and mounted as shown in U.S. 4,886,342 and U.S. 3,784,287, but this severely limits the choice of the optical materials of which the lens elements are made. For example, certain index ranges and V number materials may be required by the photographic lens system, in order to enhance its performance, but such materials are available in optical grade are glass and not in plastic.

Finally, there is a problem if the edge contact is established too far from the clear aperture, the lens element diameter will increase, the lens elements thickness will increase and the compactness of the overall optical system will be compromised.

Thus, there is a growing demand for more compact photographic cameras and correspondingly, there exists a need to further improve and simplify the lens system for use in such cameras, and to lower the cost of making such lens systems by making them less expensive to assemble while maintaining or improving their imaging quality.

**Disclosure of Invention**

An object of the present invention is to produce a photographic lens device of high quality which includes a lens system which is uniquely suited for use in compact photographic cameras and which is relatively inexpensive to produce and to assemble.

Yet, another object of the present invention is to provide a lens system that is easy to assemble and the configuration of which promotes lens elements to self-center and also eliminates the need of spacers while maintaining the lens system's compactness.

These and other objects of the invention have been attained by a lens system as defined in claim 1 and a photographic device as defined in claim 13. In a particular aspect of the invention the lens system comprises from the object side: a first positive meniscus lens component having foremost lens surface convex to the object side; a second bi-concave lens component; a third bi-convex lens component; and a diaphragm arranged behind the rear-most lens element of the the lens system, wherein the lens system fulfills the following conditions:

$$N_3 - N_1 \leq 0.1$$

$$\frac{N_1}{N_2} \geq 0.9$$

$$0.25f < \Sigma d < 0.35f$$

where $f$ is the composite focal length of the lens system; $\Sigma d$ is the distance from the vertex of the foremost lens surface to the vertex of the last lens surface; $N_1$ represents the refractive index of the positive lens element forming the first lens component; $N_2$ represents the refractive index of the negative lens element forming the second lens component; $N_3$ represents the refractive index of the positive lens element forming the third lens component. These relationships help maintain the aberration's balance while maintaining the compactness of the optical system.

According to another particular aspect of the lens system of the present invention, the lens system comprises: a first outer lens component, the first outer lens component being a positive lens component; a negative lens component located between and airspaced from the first outer lens component and a second outer lens component; a positive power second outer lens component; and an aperture stop, said aperture stop located on the outer side of one of said outer lens components, wherein the airspaces between said components are so arranged that there exists an edge contact between the lens components at less than 2mm beyond clear aperture.

According to yet another particular aspect of the lens system of the present invention, the compact lens system for use in a compact photographic camera comprises: a plurality of optical elements spaced in a close proximity to one another, the plurality of lens elements having sufficient powers and spacings to enable said lens system to cover a field of view of at least 55 degrees, said plurality of lens elements including at least one positive lens element and one negative lens element wherein the airspace between said positive lens element and said negative lens element is smaller than the thickness of said positive lens element; and the lens system in order to be suitable for use in a compact camera satisfies the following parameters:

$$20 \leq f \leq 30$$

$$5 \leq BF \leq 24.85$$

$$2 \leq f/\text{No.}|_{\text{min.}} \leq 5.6 \,,$$

where $f$ is the focal length of the lens system, BF is the back focus of the lens system. $f/\text{No.}|_{\text{min.}}$ is the $f/\text{No.}$ that the system is intended to perform at without being stopped down.

According to yet another particular aspect of the lens system of the present invention, the lens system has a diaphragm or an aperture stop located on the outer side of one of the outer lens component which is capable of acting as a lens baffle to eliminate unwanted light when the lens system is operating in a wide open mode, while one of lens surfaces is acting as an aperture stop, the diaphragm is acting as an aperture stop when the lens system is operated at slower F-numbers.

According to yet another particular aspect of the lens system of the present invention, the compact lens system comprises from an object side: a first positive power meniscus lens component having a foremost lens surface convex to the object side; a second bi-concave lens component; a third bi-convex lens component; and a diaphragm arranged behind the rear-most lens element of the lens system, wherein the lens system fulfills the following conditions:

$$20 \leq f \leq 30$$

$$5 \leq BF \leq 24.85$$

$$3 \leq f/\text{No.} \leq 16,$$

said lens components having sufficient surface radii of curvature to provide the proper bending of said components to control the propagation of unwanted overhead light so that said unwanted light rays propagating through the lens system are bent away from propagating toward the opening of the diaphragm.

## Brief Description of the Drawings

Figure 1 is a simplified cross-sectional view of a lens system corresponding to a first embodiment of the invention.

Figure 2 is a simplified cross-sectional view of a lens system corresponding to a second embodiment of the invention.

Figures 3a-3d represent the aberration curves of the lens system corresponding to the first embodiment.

Figures 4a-4d represent the aberration curves of the lens system corresponding to the second embodiment.

Figures 5 and 6 are cross-sectional views in schematic of a photographic device showing the objective lens systems of Figures 1 and 2 and their respective mounting structure.

Figure 7 illustrates the requirements of the edge contact as they apply to the rear surface of a negative lens element.

Figure 8 illustrates formation and propagation of unwanted light if the edge contact points are located at the clear aperture of the surface.

Figure 9 illustrates how rays of stray light propagate in an optical system that does not form an embodiment of this invention.

Figure 10 illustrates a lens system of Figure 2 and how it substantially eliminates light flare or stray light problems.

Figure 11 is a cross-sectional view of the lens system of Figure 2 and showing a mounted objective lens system in a barrel utilizing a heat-seal ring retainer.

Figures 12a and 12b illustrate steps in the formation of a heat-seal retainer for an optical mount such as one illustrated in Figure 11.

## Best Mode for Carrying Out the Invention

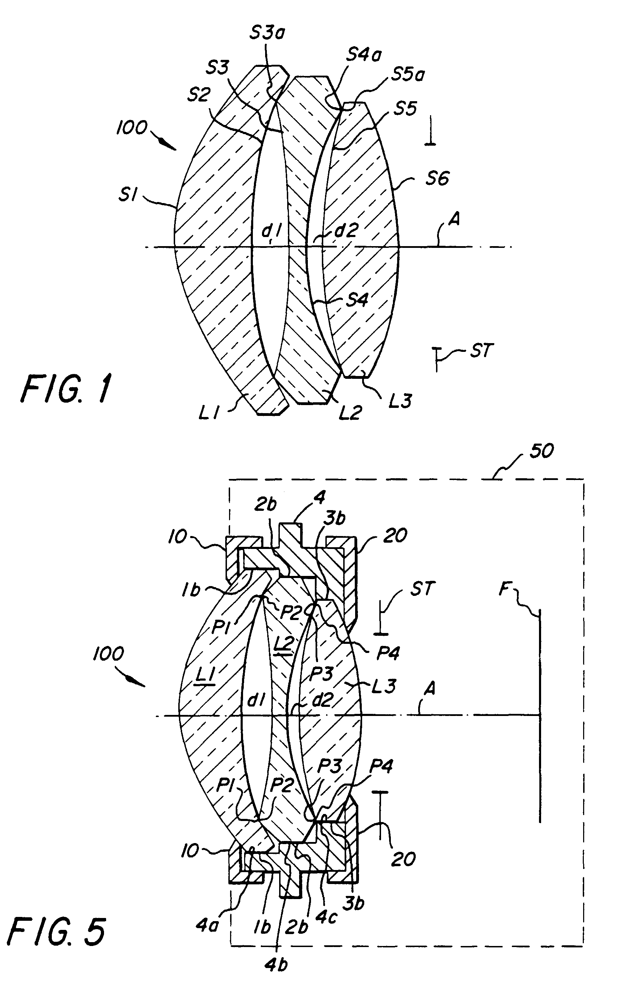

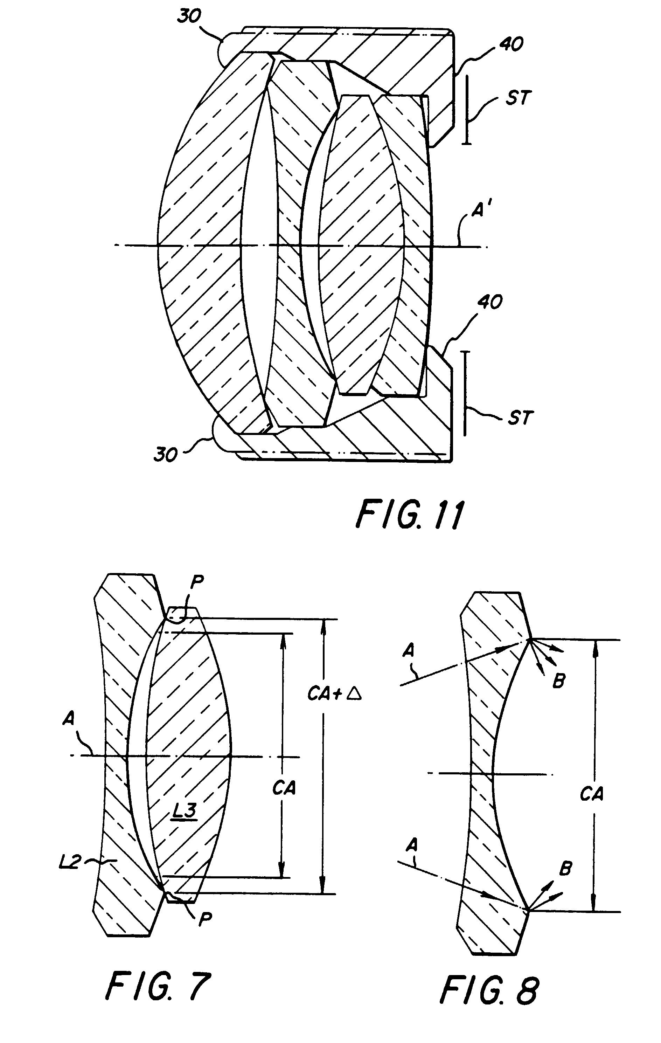

Referring to Figs. 1 and 5, a photographic device, such as a compact photographic camera 50, includes a barrel 4 and a three-component lens system 100 retained on the lens barrel 4 and including, in order from an object side, a first, second and third lens elements L1, L2 and L3, respectively, in appropriately spaced axial alignment and forming a taking lens system for focusing light onto a photographic film F located by suitable means (not shown) at the focal plane of the camera. An aperture stop ST is located behind the rear lens element L3. The f/No. of the lens system may be determined by the opening in the diaphragm ST. As the opening is reduced, the f/No. increases. The particular lens mount 4 is shown for illustrative purposes only and this is but one type of mount which may be used with the lens system disclosed. Since the lens system is primarily intended for use in connection with very compact photographic cameras which are fabricated on a high volume production basis, it is preferred that the lens mount be compact and also be constructed so that its manufacture is adapted to the assembly of the lens components therein for mass production. In this particular embodiment, the first lens component is positive and is in the form of a single lens element L1 which has a meniscus shape and has a convex first surface S1 and a concave second surface S2. The second lens component is in the form of a bi-concave lens element having a front surface S3 and a rear surface S4. A third lens component is in the form of a bi-convex single lens element and it has a front surface S5 and a rear surface S6. The focal lengths of the first, second and third lens components are 19.86, -8.31 and 10.04 respectively. The absolute value of the ratio of the focal length of the middle component to the total lens system focal length is 0.325. It is important in order to fill the film plane, that the compact lens system according to this invention is capable of covering at least a 55 degree field of view and preferably a field of view of 60 degrees or more and most preferably, a field of 65 degrees or greater. In particular, the lens system of this embodiment is capable of maintaining an excellent performance over a 67 or 68 degree field of view. The lens system satisfies the following conditions and definitions:

$$N_3 - N_1 \leq 0.1 \;;$$

$$\frac{N_1}{N_2} \geq 0.9;$$

and more preferably $0.9 < N_2/N_1 < 1.0$;

$$0.22f < \Sigma d < 0.38f$$

where $f$ is the composite focal length of the lens system; $\Sigma d$ is the distance from the vertex of the foremost lens surface to the vertex of the last lens surface; $N_1$ represents the refractive index of a positive lens element forming the first lens component; $N_2$ represents the refractive index of a negative lens element forming the second lens component; and $N_3$ represents the refractive index of a positive lens element forming the third lens component.

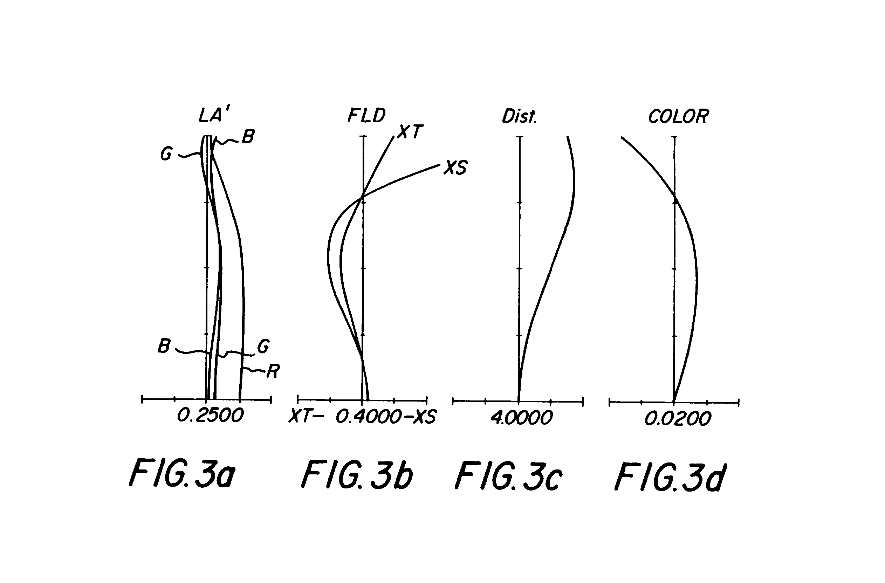

The significance of the above-mentioned conditions is as follows: It is advantageous to have high index glasses in the positive lens elements, because it helps to keep the Petzval sum low. Also, with the higher index of refraction, the lens element may be made with weaker radii of curvature, thus, the lens system can be made more compact. In addition, in order to correct the Petzval sum, it is advantageous to have the index $N_2$ of the negative lens element as low as possible. However, typically in flint glasses, the lower the index of refraction is, the higher the V number; and, in order to correct color aberrations, we need a low V number. Thus, the first two requirements help us balance the Petzval sum and color correction in the lens system. The last condition helps to keep the lens compact and is also a condition for well-corrected coma aberration for a wide angle system as ours. The performance of the lens system of the first embodiment is illustrated in Figs. 3a-3d.

Fig. 3a is a graph of longitudinal spherical aberration (in mm) with respect to aperture is in three wavelengths. The graph shows well corrected spherical aberration and the axial color which is corrected at approximately the 0.9 aperture.

Fig. 3b is a graph of the tangential and sagittal coddington field curvature (in mm). It can be seen that there is a node beyond the 0.6 field and the astigmatism is well balanced.

Fig. 3c is a graph that plots the percent distortion with respect to relative image height. It can be seen that the distortion is not greater than 2% at any point in the field.

Fig 3d shows a plot of lateral color (in mm) as a function of relative field. It shows that the lateral color is well balanced and does not vary by more than 5 microns through most of the field.

Although in principal the lens elements can be made of plastic, the lens elements of this embodiment are all made from glass. This eliminates some of the distortion problems referred to in U.S. 4,886,342. The lens elements powers, shapes and the airspaces between the lens elements of lens system 100 are arranged so that there exists an edge contact between mutually contacting lens elements at less than $\Delta = 2mm$ beyond the clear aperture CA. (See Fig. 7 for illustration of $\Delta$.) The term 'edge contact' means that only the points within the geometrical continuation of the optical surfaces contact one another. The "clear aperture" of a surface of a lens element in the lens system is basically a minimum size aperture of the lens element that allows all of the desired bundles of light rays to go through the lens system to the image plane. These desired bundles of rays are often determined by other surfaces of the lens system. The clear aperture of a surface of a lens element in the lens system is defined as the necessary minimum size openings on the lens surfaces of the lens system that must satisfy both of the following conditions: a) it must be large enough to satisfy the minimum *f*/No. required; and b) it must be large enough to transmit the required amount of light in the corners of the field at the maximum field coverage. If the clear apertures are too small, then there will be unacceptable vignetting; and if they are too large, poorly corrected light could reach the image plane. Also, if they are too large, the lens system will not be compact as desired, and may exhibit stray light problems. The section outside the clear aperture may be masked off or otherwise treated so that light striking outside of the clear aperture would be prevented from propagating through the lens system.

The pairs of mutually contacting surfaces are S2a and S3a; S4a and S5a. These surfaces do not have to be flat, vertical surfaces and they do not need to be cemented together. Surfaces S2a, S3a, S4a and S5a are segments of the surfaces S2, S3, S4 and S5, respectively.

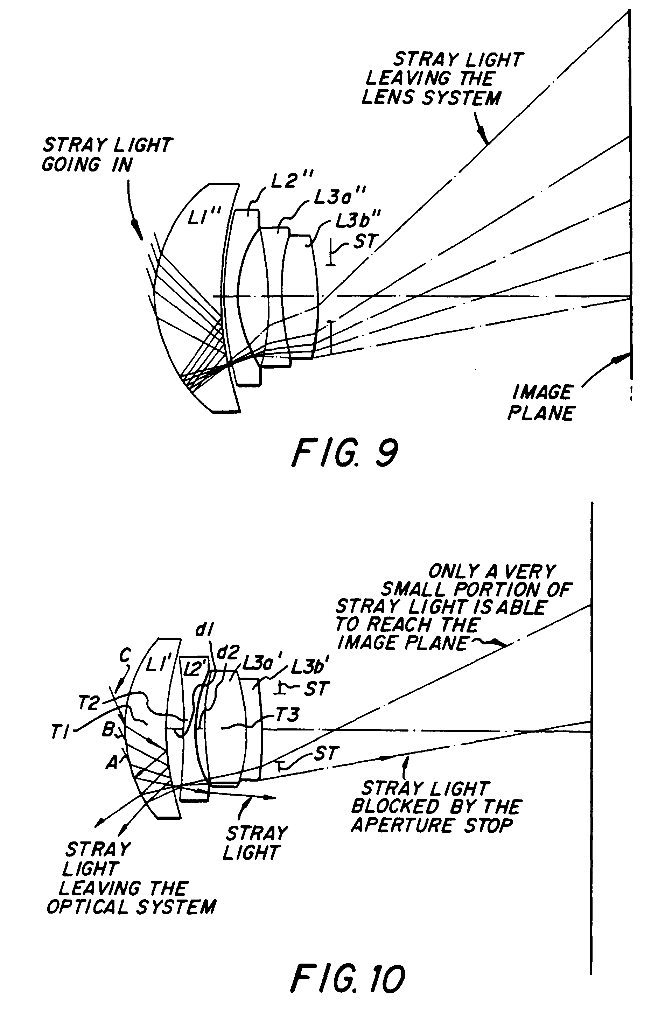

Having an edge contact allows all of the elements to be placed next to each other so they physically touch each other as in glass-to-glass contact thus eliminating the costly need for superfluous spacers. No adhesive is usually necessary. However, where a thin layer of adhesive is used, this may still be considered to be edge contact in accordance with the invention. This edge contact also eliminates tolerance build-up on the thickness of spacers as well as tolerance build-up on spacer wedge. The manufacturing errors on spacer thickness and spacer wedge angle also cause misalignment of the lens components with respect to each other. This results in the degredation in the performance of the lens system. As stated above, by maintaining the contact between the lens elements, the need for spacers is eliminated which also results in improved performance of the optical system. As an additional benefit of the edge contact, the lens components tend to self align or self center, thus, eliminating a need for complex alignment procedures. The importance of achieving an edge contact at points P on a circle of diameter $(CA + \Delta)$, where $\Delta$ is in the range of or less than 2mm beyond the clear aperture CA (Fig. 7), is that the lens diameter will be held at a minimum. This requirement also tends to minimize the thicknesses of the lens elements and the airspaces between them and thus produces the overall lens system which is very compact and also less expensive to manufacture. On the other hand, the edge contact should not be exactly at the clear aperture (i.e. $\Delta \approx 0.0mm$ beyond the clear apeture) because digs and chips from beveling operation can cause unwanted sparkling. That is, the digs, scratches, bubbles, and chips, etc. at the resulting edge contact cause the impinging light A to disperse (Fig. 8). The (unwanted) dispersed light B then may propagate through the lens system and impinge on the imaging medium such as film. With the stop outside the lens system, the cost of "split" barrels is also eliminated.

The requirement that the airspace $d_1$ between the first and the second elements L1 and L2 be smaller than the first element's thickness $T_1$ and that the airspace $d_2$ between the second lens element L2 and the third lens element L3 be smaller than the thickness $T_3$ of the third lens element L3 facilitates the compactness of the lens system and helps maintain the edge contact between the lens elements. It is preferable that the following relationship be maintained,

$T_1 \geq 2d_1$ and $T_3 \geq 2d_2$ and more preferably that $T_1 \geq 2d_1$ and $T_3 \geq 3d_2$. In this first embodiment, $\frac{T_1}{d_1} = 2.9$ and $\frac{T_3}{d_2} = 3.5$. The dimensions $d_1$, $d_2$, $T_1$ and $T_3$ are taken along the optical axis A. In addition, in order to facilitate lens system compactness, one may specify that at least one airspace between the positive lens element and the second or middle lens element be smaller than the thickness of said second lens element. It should be also noted, the requirements that $0.275 \leq \frac{|f_2|}{f} \leq 0.375$ and that $1.5 \leq \frac{f_1}{f_3}$ (where $f_1$, $f_2$ and $f_3$ are the focal length of the first, second and third lens components respectfully, and $f$ is the focal length of the lens system) help to maintain a nice aberration balance while keeping the lens system compact.

Finally, by placing the aperture stop (or diapragm) at the rear of the lens system, it is protected from dust and dirt. Placement of the aperture stop (i.e. diapragm) in front of the optical system, requires that a cover glass be placed in front of the aperture stop to keep dust and dirt out. Therefore, by placing the aperture stop at the rear of the optical system (i.e. towards the image plane), eliminates the need for the cover glass.

This design is extremely compact as can be determined by a vertex-to-film plane distance which is short - i. e. only 27.26mm when the focal length is 25.6mm. The size of the front clear aperture is 9.9mm and the system $f$/No. is 4.5. In designing the lens system for the compact camera, it has been determined that the focal length range needs to be between 20 and 30mm in order to make the lens system more compact and that the focal range should preferably be between 22 and 28mm and more preferably between 25 and 27mm. We determined that a short focal length (i.e. $f < 20$mm) tends to require more elements because the field angle has to increase to cover the same image size, and this causes the aberration correction to become increasingly difficult. In particular, such aberrations as distortion and astigmatism become predominant. On the other hand, a lens system having the same $f$/No., but a longer focal length (i.e. $f > 30$) will tend to make all elements larger and the front vertex to image plane longer thus producing a more bulky lens. The advantages provided by edge contact would also be jeopardized. In addition, the back focal length BF, (back focal length is the distance as measured from the rear vertex of the rear surface of the last lens element to the image plane) needs to be between 5mm and 24.85mm. Placing a lens element closer than approximately 5mm to the image plane when stopping the lens down to $f$/16 or greater results in small artifacts on the lens surface near the image plane to be visible at the image plane. Thus, it is found that a lens system satisfying the following parameters or requirements is particularly suited for use in very compact cameras:

$$(1) \qquad 20 \leq f \leq 30,$$

$$(2) \qquad 5 \leq BF \leq 24.85$$

and

$$(3) \qquad 2 \leq f/\text{No.I}_{min.} \leq 5.6,$$

where $f$ is the focal length of the lens system, BF is the back focus of the lens system. $f / \text{No.I}_{min}$ is the $f$/No. that the system is intended to perform at without being stepped down. Alternatively, in the lens system which can be used in lower cost cameras, the $f$/No, may be slower, thus, the third requirement can be altered to $3 < f/\text{No.} < 16$ where $f$/No. is the lens system's F-number.

Figure 5 illustrates the lens elements L1, L2 and L3 of lens system 100 are freely placed in the lens barrel 4. Their optical axes are aligned without a need to cement these elements to each other. All of the lens components are pressed against the lens barrel. In this embodiment, the three lens components are mounted in the cylindrical recess surface of the lens barrel and have outer annual barrel contacting surfaces 1b, 2b and 3b respectively which fit within hollow cylindrical surfaces 4a, 4b and 4c forming the inner surfaces of the barrel 4. The lens elements have just enough clearance to move within the barrel so as to be positioned within the barrel. Finally, the lens system 100 is securely retained within the lens barrel 4 by a pressing member 10 for pressing the first lens element L1 against the second lens element L2, and by a pressing member 20 for pressing the third lens element L3 against the second lens element L2.

In the photographic lens devices, the lens components can be readily slipped inside the lens barrel 4. Once the edge contact is established between the lens elements, the lens elements align themselves with a high degree of accuracy and are then retained in the barrel in that alignment by the pressing members 10 and 20 which are adjacent to lens elements 1 and 3 respectively.

Finally, it is preferred that high index materials be used for outer elements in a design of this lens system. Some of the reasons are reduced field curvature and spherical aberration correction. In addition, the edge contact properties are closely related to a best choice of high index glass. (This is all related to $f$/No., field coverage and focal length range requirements discussed above.) If low indices are used, the powers and radii of the outer elements are redefined in such a way that it becomes more difficult to achieve edge conditions.

Constructional values for the first preferred embodiment of the invention is shown in Table 1 below, in which the lens elements are numbered from front to rear, N is the index of refraction for the d line of the spectrum, V is the Abbe number, R is the radius of curvature of the lens surface, T is the axial thickness of the lens element, and d is the axial separation between the lens elements.

Table 1

| $f$ = 25.57; BF = 20.68; semifield angle = 33.58°. Maximum aperture with no vignetting corresponds to $f$/4.5. | | | | | | |
|---|---|---|---|---|---|---|
| | | | | | Material | |
| Lens Element | Surface | Clear Aper. | Radius | Thickness | $N_d$ | V |
| L1 | S1 | 9.90 | $R_1$ = 7.4251 | $T_1$ = 2.852 | 1.713 | 53.8 |
| | S2 | 7.90 | $R_2$ = 13.046 | $d_1$ = 0.974 | | |
| L2 | S3 | 7.90 | $R_3$ = -21.793 | $T_2$ = 0.520 | 1.699 | 30.1 |
| | S4 | 6.86 | $R_4$ = 8.0817 | $d_2$ = 0.533 | | |
| L3 | S5 | 6.79 | $R_5$ = 15.453 | $T_3$ = 1.862 | 1.786 | 44.2 |
| | S6 | 6.28 | $R_6$ = -15.453 | $d_3$ = 1.000 | | |
| | | 4.40 | DIAPHRAGM | | | |

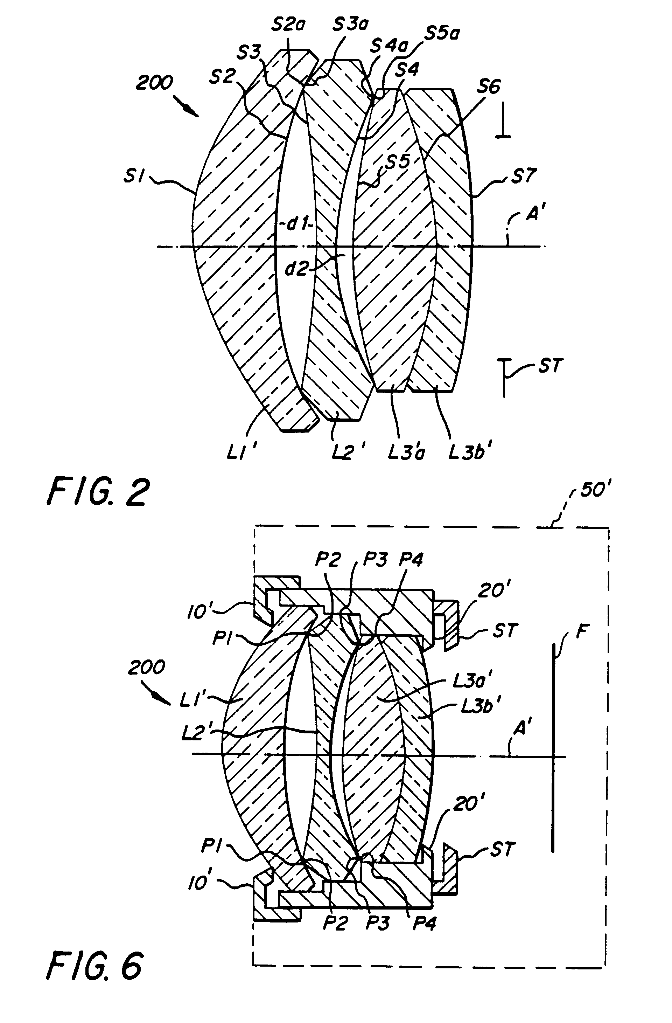

The second embodiment of the present invention is shown in Figs. 2, 6 and 11. Referring to Figures 2, 6 and 11, a photographic device includes a barrel (4A, 4B) and a three component lens system 200 retained on the lens barrel. The lens system 200 parameters are provided in Table 2.

The second embodiment is similar to the first embodiment in that it is also a behind-stop type lens system for photographic cameras and in that it also comprises three lens components (arranged in positive-negative-positive configuration). Thus, this lens constitutes a triplet derivative. However, unlike the first embodiment, this embodiment comprises four lens elements. They are, in succession from the object side, a first lens component that is in the form of a first lens element L1' which is a positive meniscus lens element having its convex surface facing the object side, a second lens component that is in the form of a second lens element L2' which is biconcave, a third lens component that is in the form of a third lens element L3a' which is biconvex and a fourth lens element L3b' which is a negative meniscus lens element having its convex surface facing the image side. The third and the fourth lens elements L3a' and L3b' are joined together to form a positive cemented doublet lens component. The lens system 200 has a stop ST in position most adjacent to the rear surface S7' of the fourth or rear-most lens element L3b'. It is important that the lens system has a field of view of at least 55 degrees, preferably over 60 degrees and most preferably 65 or more degrees. Accordingly, the lens system of this embodiment has a full field of over 67 degrees. The lens system 200 was found, as in the previous embodiment, that having $0.275 \leq \frac{|f_2|}{f} \leq 0.375$ and $1.5 \leq \frac{f_1}{f_3}$ helped maintain the aberration balance while keeping the lens system compact. The lens system of the second embodiment also satisfies the following conditions:

$$20 \leq f \leq 30$$

$$5 \leq BF \leq 24.85$$

$$3 \leq f/No. \leq 16 ,$$

more specifically, the parameters of the lens system are provided in the following table.

Table 2

| Lens Element | Surface | Clear Aper. | Radius | Thickness | Material | |
|---|---|---|---|---|---|---|
| $f= 25.56$; BF = 20.31; semifield angle = 33.58°; $f$/No. = 3.5. | | | | | | |
| | | | | | $N_d$ | V |
| L1' | S1' | 10.53 | $R_1 = 8.02940$ | $T_1 = 2.500$ | 1.734 | 51.8 |
| | S2' | 8.80 | $R_2 = 15.8029$ | $d_1 = 1.102$ | | |
| L2' | S3' | 8.23 | $R_3 = -31.7598$ | $T_2 = 0.668$ | 1.689 | 31.2 |
| | S4' | 6.76 | $R_4 = 8.18380$ | $d_2 = 0.577$ | | |
| L3a' | S5' | 6.60 | $R_5 = 15.8680$ | $T_3 = 2.565$ | 1.788 | 47.5 |
| L3b' | S6' | 6.11 | $R_6 = -9.92860$ | $T_4 = 0.850$ | 1.569 | 56.1 |
| | S7' | 5.91 | $R_7 = -31.4600$ | $d_3 = 1.000$ | | |
| | | $6.14^{(1)}$ | DIAPHRAGM$^{(1)}$ | | | |

(1) THE DIAPHRAM ACTS AS A BAFFLE WHEN THE LENS OPERATES AT $f$/3.5 AND APERTURE HOLD ON SURFACE S7' BECOMES THE STOP.

All of the above dimentions, for radii, thickness and clear apertures are in millimeters.

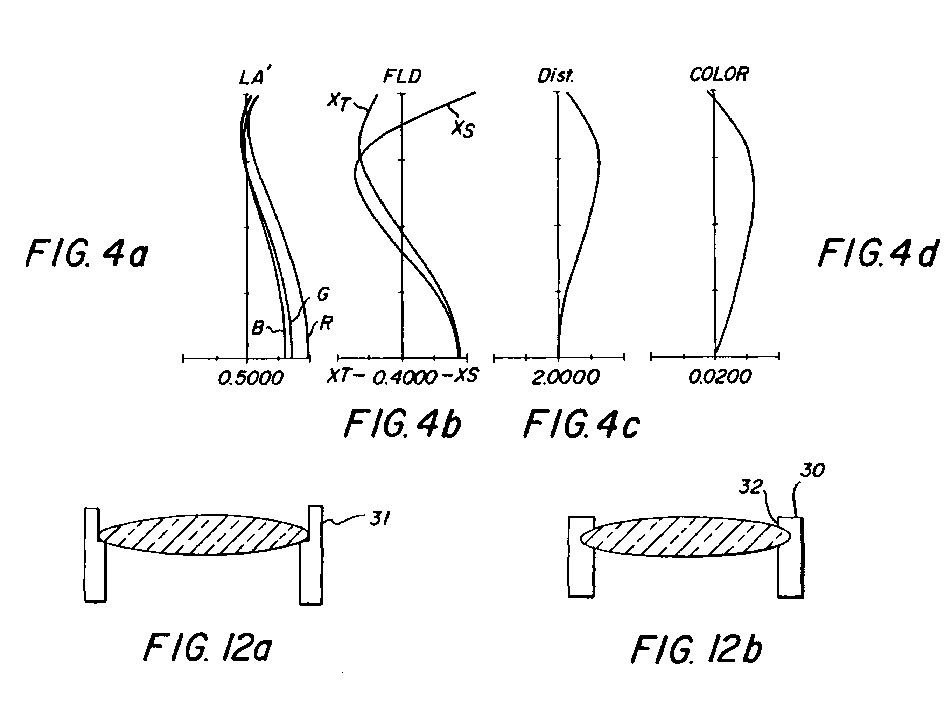

The performance of this lens system 200 is illustrated in Figs. 4a-4d.

Fig. 4a is the graph of longitudinal spherical aberration (in mm) with respect to aperture in three wavelengths. The graph shows well corrected spherical aberration and the axial color is corrected at approximately the 0.9 aperture.

Fig. 4b is a graph of the tangential and sagittal coddington field curvature (in mm). It can be seen that there is a node beyond the 0.6 field and the astigmatism is well balanced.

Fig. 4c is a graph that plots the percent distortion with respect to relative image height. The distortion is less than approximately 0.5% at any point in the field.

Fig. 4d shows a plot of lateral color (in mm) as a function of relative field. It shows that the lateral color is well balanced and does not vary by more than 5 microns through most of the field.

Figures 6 and 11 illustrate that the lens elements L1, L2, L3 and L4 of lens system 200 are freely placed in the camera's lens barrels. Their optical axes A' are aligned without a need to cement these elements to each other. All of the lens components are pressed against the respective lens barrel inner walls. In each embodiment, the three lens components are mounted in cylindrical recess surfaces of the lens barrel and have outer annual barrel contacting surfaces 1b', 2b' and 3b' respectively. The lens elements have just enough clearance to move within the barrel so as to be positioned within the barrel. Finally, the lens system 200 is securely retained within the lens barrel by a pressing member 10 for pressing the first lens element L1 against the second lens element L2, and by a pressing member 20 for pressing the third lens element L3 against the second lens element L2.

In the photographic lens devices, the lens components can be readily slipped inside the lens barrel 4. Once the edge contact is established between the lens elements, the lens elements align themselves, i.e. self-center, with a high degree of accuracy and are then retained in the barrel in that alignment by pressure means such as the pressing members 10' and 20' or the barrel surfaces 30 and 40 which are adjacent to lens elements L1 and L4 respectively.

Finally, it is preferred that high index materials be used for outer elements in a design of this lens system. Some of the reasons are reduced field curvature and spherical aberration correction. In addition, the edge contact properties are closely related to a best choice of high index glass. (This is all related to $f$/No., field coverage and focal length range requirements discussed above.) If low indices are used, the powers and radii of the outer elements are redefined in such a way that it becomes more difficult to achieve edge conditions.

The lens system assembly is done in the following fashion. At first, the rear component is dropped into the lens barrel where it is retained by front and rear pressing members 30 or 40 and the barrel walls. The second component is dropped in second. It contacts physically with the rear lens component establishing the edge contact. Once the edge contact is established, the airspace $d_2$ between the second and the rear lens component is automatically set with the required precision without any further involvement on the part of the assembly personnel. Lastly, the front component corresponding to the lens element L1 is dropped into the lens barrel. Once the edge contact between the front component and the second component is established, the distance between these components is accurately set. Finally, with all lens components nested against each other in a barrel, pressure means is applied to the front lens element to permanently keep the lens system elements in an optical, axially aligned relationship with each other and to prevent lens elements from movement. This may be done by use of a pressure member 10' (Fig. 6), or alternatively by use of a heat seal retainer 30 (Fig. 11). The heat seal retainer 30 may be formed (Fig. 12) by applying sufficient sonic energy to create heat which softens a plastic lip 31 which forms a ring 32 and extends round the edge of a lens element. A metal tool then presses the ring over and down upon the upper surface of the lens element, permanently retaining it in the barrel.

As in the previous embodiment, the airspaces between the lens elements are arranged so that there exists an edge contact between the lens elements at $\Delta$ equal to about 2mm, or $\Delta$ less than 2mm beyond the clear aperture CA. This insures that the lens elements can be placed next to each other in glass-to-glass (i.e. lens element-to-lens element) contact thus eliminating the costly need for superfluous spacers while having a compact lens system which can be used in a compact photographic camera. With the stop outside the lens system and this combination of lens elements, the cost of "split" barrels is eliminated. When two lens elements are to be edge contacted to eliminate the need for a spacer, it is advantageous to have both lens elements have a finished diameter that extends beyond the edge contact points and then precision bevel one of the elements (usually the element with the concave surface). The bevel is placed at the precise distance from the lens element's center so that its sag, when edge contacted with another lens element (as done during the assembly of lens elements into the barrel), will accurately define the desired airspace between the two elements. In addition, manufacturing the precision bevel in this manner reduces the amount of edge chips and hence reduces the effects of unwanted stray light.

The requirement that the airspace $d_1$ between the first and the second lens elements L1' and L2' be smaller than the first lens element's thickness $T_1$ and that the airspace $d_2$ between the second lens element L2 and the third lens element L3a' be smaller than the thickness $T_3$ of the third lens element L3a' facilitates the compactness of the lens system and helps maintain the edge contact between the lens elements. It is preferable that the following relationship be maintained, $T_1 \geq 2d_1$ and $T_3 \geq 2d_2$ and more preferably that $T_1 \geq 2d_1$ and $T3 \geq 3d_2$. In this first embodiment, $\frac{T_1}{d_1} = 2.2$ and $\frac{T_3}{d_2} = 4.4$. In addition, in order to facilitate lens system compactness, one may specify that at least one airspace between the positive lens element and the second or middle lens element be smaller than the thickness of said second lens element.

This arrangement also enhances the unique method of utilizing the rear surface of which lens of the lens system to act as the stop when the lens system is operating in a wide open or fast mode (i.e. low $f$/No.) and enabling the "true" diaphragm; i.e. the aperture stop, to act as a baffle to control the upper rays at the $f$/3.5 opening (see Fig. 6). For $f$/No.'s slower than $f$/3.5, the diaphragm acts as the true stop.

Furthermore, by placing a limiting clear aperture at surface S5 controls upper rays at the mid obliquities thus improving their image quality.

An important consideration is the reduction of light coming from overhead and through multiple reflections eventually exposing the film. This condition is illustrated in Fig. 9. Fig. 9 shows that a double reflection condition for a light source at 72 degree azimuth angle allowing bundles of light striking high in the aperture to easily bounce twice within the front lens and then make it through a lens system to the image plane, resulting in an unacceptable picture quality.

Therefore, the first and the second lens components corresponding to lens elements L1' and L2' are configured so as to minimize the upward slope of the stray rays after the reflection from the front surface of the front lens element L1' (i.e. the 2nd reflection within the first lens element). This change results in fewer stray light rays passing through the aperture stop opening. The diaphragm walls of the aperture stop will thus block the rest of the unwanted or stray light. The shape of the second component also permits the shape of the first lens component L1 to be configured to minimize the angle of incidence of the rays for controlling internal reflections, with the result that the high incident overhead light (ray C in Fig. 10) that enters the front surface of S1' above the optical axis does not propagate towards the opening in the diaphragm and instead will be limited by the diaphragm wall. Thus, total internal reflections that will send light rays towards the image plane is minimized.

The lens system 200 of the second preferred embodiment illustrates the result of designing for stray light minimization. The stray bundles of light D do not make it through the lens system unless they strike the front most lens surface of the lens system below the optical axis resulting in near grazing incidence thus reducing the intensity of the light that is refracted. The refracted bundle is then vignetted before it reaches the image.

Thus, in this second embodiment, the shape of the second element L2' is configured to eliminate double and triple reflections that results in undesirable light flare at the image plane from a bright overhead object, such as the sun, when it is subtending an angle from 55 to 75 degrees. When the sun is lower in the horizon (i.e. when it subtends an angle less than 55 degrees) it would be seen in the viewfinder and the camera sensor would be eliminated as a potential camera shot. If the sun is higher than 75 degrees, then there is no chance of double reflection due to high grazing angles of the light. To summarize, the first and the second lens components have sufficient bendings to control the double or triple reflections of the stray light propagating within the optical system. The bending of the unwanted light rays so they do not propagate towards the opening in the diaphragm and on to the image (or film) plane improves the resulting image or picture quality. Figure 9 shows the stray ray bundles and illustrates this effect . Figure 10 shows how this effect has been controlled.

Finally, the lens systems described herein are particularly advantageous when used in the focal length range 24mm to 27mm and for covering half fields of at least 34 degrees.

The invention has been described in detail with particular reference to preferred embodiments thereof, but it will be understood that variations and modifications can be effected within the scope of the invention as defined in the claims.

**Claims**

1.   A lens system (100; 200) comprising:

a first positive optical power outer lens component (L1; L1');
a second positive optical power outer lens component (L3; L3a'-L3b');
a negative optical power lens component (L2; L2') located between and airspaced from said first and second outer lens components; and
a diaphragm (ST), said diaphragm located on the outer side of said second positive outer lens component; characterized in that the airspaces (d1, d2) between said lens components and the optical powers and the curvatures of said lens components are such that there exists between all of the adjacent optical surfaces of the adjacent lens components an edge contact (P1, P2, P3, P4) located only at points (P) located within the region from over 0.0mm at a position to sufficiently eliminate stray light to about 2mm beyond the clear aperture diameter of the corresponding lens surface, wherein the clear aperture is the necessary minimum size opening (CA) on the lens surface that satisfies both of the following conditions: a) it is large enough to satisfy the minimum f/No. required; and b) it is large enough to transmit the required amount of light in the corners of the field at the maximum field coverage.

2.   A lens system according to Claim 1, wherein said lens components have sufficient powers and spacings to enable said lens system to cover a field of view of at least 55 degrees, and an airspace between one of said positive outer lens components and said negative power lens component is smaller than the thickness of said one of said positive outer lens element, and

said lens system satisfies the following parameters:

$$20 \leq f \leq 30$$

$$5 \leq BF \leq 24.85$$

$$2 \leq f/No.|_{min.} \leq 5.6 \,,$$

where $f$ is the focal length of the lens system, BF is the back focus of the lens system and $f/No.|_{min.}$ is the F-number that the lens system performs at without being stopped down.

3.   A lens system according to Claim 2 wherein:

said first outer lens (L1) is a meniscus lens component having a foremost lens surface convex to the object side;
said negative optical power lens component (L2) is a bi-concave component;
said second outer lens component (L3) is a bi-convex lens component; and
said diaphragm is arranged behind the rear-most lens element of the lens system, wherein the lens system fulfills the following conditions:

$$N_3 - N_1 \leq 0.1$$

$$\frac{N_1}{N_2} \geq 0.9$$

$$0.25f < \Sigma d < 0.35f$$

wherein:

$f$ is the composite focal length of the lens system;

$\Sigma d$ is the distance from the vertex of the foremost lens surface to the vertex of the last lens surface;

$N_1$ represents the refractive index of the positive lens element forming the first lens component;

$N_2$ represents the refractive index of the negative lens element forming the second lens component; and

$N_3$ represents the refractive index of the positive lens element forming the third lens component.

4. A lens system according to any one of the preceding claims, wherein one of the lens surfaces of the lens components and said diaphragm define two aperture stop locations, said diaphragm being located to operate as an aperture stop when in a small open condition, said lens components having one of the lens surfaces positioned and sized to operate as an aperture stop when said diaphragm does not function as an aperture stop but operates as a baffle to eliminate propagation of unwanted light towards the image plane in a wide open condition.

5. A lens system as claimed in Claim 3, wherein:

$$T_1 \geq 2\,d_1$$

and

$$T_3 \geq 2\,d_2.$$

wherein:

$d_1$ is an airspace between the first and the second lens elements;

$d_2$ is an airspace between the second and the third lens elements;

$T_1$ is the thickness of the first lens element; and

$T_3$ is the thickness of the third lens element.

6. A lens system according to Claim 3, wherein:

$$0.275 \leq \frac{|f_2|}{f} < 0.375 \text{ and } 1.5 \leq \frac{f_1}{f_3},$$

wherein:

$f_1$ represents the focal length of the first lens component;

$f_2$ represents the focal length of the second lens component;

$f_3$ represents the focal length of the third lens component; and

$f$ is the focal lens of the lens system.

7. A lens system according to Claim 3, wherein:

$$0.3 \leq \frac{|f_2|}{f} \leq 0.36$$

and

$$1.6 \leq \frac{f_1}{|f_2|} \leq 2.0,$$

wherein

$f_1$ represents the focal length of the first lens component;
$f_2$ represents the focal length of the second lens component;
$f$ is the focal lens of the lens system.

8. A lens system according to Claim 4, wherein:

$$0.275 \leq \frac{|f_2|}{f} < 0.375 \text{ and } 1.5 \leq \frac{f_1}{f_3},$$

where:

$f_3$ represents the focal length of the third lens component;
$f_2$ represents the focal length of the second lens component;
$f_1$ represents the focal length of the first lens component; and
$f$ is the focal lens of the lens system.

9. A lens system according to Claim 1, wherein each lens component is constituted by a single lens element.

10. A lens system according to claim 1, wherein the rear lens component is a cemented doublet (L3a'-L3b').

11. A lens system according to claim 6,
wherein:

said first positive optical power lens component is a positive meniscus lens component having an object type surface convex to the object side;
said negative optical power lens component is a bi-concave lens element; and
said second positive optical power lens component is a bi-convex lens component.

12. A lens system according to claim 2, wherein all of the lens elements are glass lens elements.

13. A photographic device (50; 50') comprising: a) a lens system (100; 200) including:

a first lens component (L1; L1') having a first and a second lens surface;
a second lens component (L2; L2') having a first surface and a second surface, said first surface of the second lens component having a first surface clear aperture, said second surface of said second lens component having a second surface clear aperture, said first lens surface of said second lens component being positioned in contact with said second lens surface of said first lens component, said contacting lens surfaces pressing against each other and forming an edge contact (P1-P2) at over 0.0mm and less than 2mm beyond the clear apertures of said contacting lens surfaces;
a third lens component (L3; L3a'-L3b') having a first surface and a second surface, said first surface of the third lens component having a first surface clear aperture, said second surface of said third lens component having a second surface clear aperture, said second lens surface of said second lens component being positioned in respective contact with said first lens surface of said third lens component, said respective contacting surfaces pressing against each other and forming an edge contact (P3-P4) at over 0.0mm and less than 2mm beyond the clear apertures of said respective contacting lens surfaces, the clear aperture being the necessary minimum size opening (CA) on the corresponding lens surface of the lens system required to satisfy both the following conditions:

i) it is large enough to satisfy the minimum f/No. required; and ii) it is large enough to transmit the required amount of light in the corners of the field at the maximum field coverage;

and b) a lens barrel (4) for containing said lens components in alignment with respect to each other, said barrel including: annually-shaped surface means (4a, 4b, 4c) for engaging each of the lens components; a first pressing member (10; 10') for engaging the front surface of the first lens element and for exerting pressure thereon; and a second pressing member (20; 20') for engaging the rear surface of the rear lens element and for exerting pressure thereon.

**Patentansprüche**

1. Optisches System (100; 200) mit

   - einer ersten äußeren Linsenkomponente (L1; L1') mit positiver Brechkraft;
   - einer zweiten äußeren Linsenkomponente (L3; L3a', L3b') mit positiver Brechkraft;
   - einer Linsenkomponente (L2; L2') mit negativer Brechkraft, die zwischen der ersten und zweiten äußeren Linsenkomponente angeordnet und von diesen jeweils durch eine Luftkammer beabstandet ist; und
   - einer Blende (ST), die an der Außenseite der zweiten äußeren Linsenkomponente mit positiver Brechkraft angeordnet ist;

   **dadurch gekennzeichnet,** daß die Luftkammern (d1, d2) zwischen den Linsenkomponenten sowie die optischen Brechkräfte und die Krümmungen der Linsenkomponenten so gewählt sind, daß zwischen allen benachbarten optischen Flächen der benachbarten Linsenkomponenten ein Kantenkontakt (P1, P2, P3, P4) erfolgt, der nur an den Stellen (P) vorhanden ist, die innerhalb des Bereichs von über 0,0 mm an einer Stelle für die ausreichende Eliminierung von Streulicht und etwa 2 mm über den freien Öffnungsdurchmesser der entsprechenden Linsenfläche hinaus liegen, wobei die freie Öffnung die erforderliche Mindestöffnung (CA) an der Linsenfläche ist, welche die beiden folgenden Bedingungen erfüllt: a) sie ist groß genug, um der erforderlichen Mindest-Blendenzahl zu genügen; und b) sie ist groß genug, um in den Ecken des Bildfeldes bei maximaler Bildfeldgröße die erforderliche Lichtmenge durchzulassen.

2. Optisches System nach Anspruch 1, dadurch gekennzeichnet, daß die Linsenkomponenten ausreichend Brechkraft und Abstand aufweisen, damit das optische System einen Bildwinkel von mindestens 55 Grad erfassen kann, und daß eine Luftkammer zwischen einer der positiven äußeren Linsenkomponenten und der Linsenkomponente mit negativer Brechkraft kleiner als die Dicke der einen der positiven äußeren Linsenkomponenten ist, und daß das optische System den folgenden Parametern genügt:

$$20 \leq f \leq 30$$

$$5 \leq BF \leq 24,85$$

$$2 \leq f/No.|_{min.} \leq 5,6,$$

   wobei $f$ die Brennweite des optischen Systems, BF den Bildbrennpunkt des optischen Systems, und $f/No.|_{min.}$ die Blendenzahl bedeuten, bei der das optische System arbeitet, ohne abgeblendet zu werden.

3. Optisches System nach Anspruch 2, dadurch gekennzeichnet,

   - daß die erste äußere Linse (L1) eine Meniskuslinsenkomponente ist, deren vordere Linsenfläche zur Seite des Aufnahmegegenstands hin eine konvexe Krümmung aufweist;
   - daß die Linse (L2) mit negativer Brechkraft eine Bikonkavkomponente ist;
   - daß die zweite äußere Linse (L3) eine Bikonvexkomponente ist; und
   - daß die Blende hinter der hintersten Linsenkomponente des optischen Systems angeordnet ist, wobei das optische System folgende Bedingungen erfüllt:

$$N_3 - N_1 \leq 0,1$$

$$\frac{N_1}{N_2} \geq 0,9$$

$$0{,}25\ f < \Sigma d < 0{,}35\ f$$

worin bedeuten:

$f$ die Gesamtbrennweite des optischen Systems;
$\Sigma$ oder Abstand vom Scheitelpunkt der vordersten Linsenfläche zum Scheitelpunkt der letzten Linsenfläche;
$N_1$ der Brechungsindex des die erste Linsenkomponente bildenden positiven Linsenelements;
$N_2$ der Brechungsindex des die zweite Linsenkomponente bildenden negativen Linsenelements; und
$N_3$ der Brechungsindex des die dritte Linsenkomponente bildenden positiven Linsenelements.

4. Optisches System nach einem der vorhergehenden Ansprüche, dadurch gekennzeichnet, daß eine der Linsenflächen der Linsenkomponenten und die Blende zwei Öffnungsblendenstellen bilden, wobei die Blende so angeordnet ist, daß sie als Öffnungsblende arbeitet, wenn sie sich in einem kleinen Öffnungszustand befindet, und wobei eine der Linsenflächen der Linsenkomponenten so positioniert und dimensioniert ist, daß sie als Öffnungsblende arbeitet, wenn die Blende nicht als Öffnungsblende, sondern als Streulichtblende arbeitet, um die Ausbreitung von unerwünschtem Licht in Richtung der Bildebene in einem großen Öffnungszustand zu verhindern.

5. Optisches System nach Anspruch 3, dadurch gekennzeichnet, daß

$$T_1 \geq 2\,d_1$$

und

$$T_3 \geq 2\,d_2$$

worin bedeuten:

$d_1$ eine Luftkammer zwischen dem ersten und zweiten Linsenelement
$d_2$ eine Luftkammer zwischen dem zweiten und dritten Linsenelement;
$T_1$ die Dicke des ersten Linsenelements; und
$T_3$ die Dicke des dritten Linsenelements.

6. Optisches System nach Anspruch 3, dadurch gekennzeichnet, daß

$$0{,}275 \leq \frac{|f_2|}{f} < 0{,}375 \text{ und } 1{,}5 \leq \frac{f_1}{f_3}$$

worin bedeuten:

$f_1$ die Brennweite der ersten Linsenkomponente;
$f_2$ die Brennweite der zweiten Linsenkomponente;
$f_3$ die Brennweite der dritten Linsenkomponente; und
$f$ die Brennweite des optischen Systems.

7. Optisches System nach Anspruch 3, dadurch gekennzeichnet, daß

$$0{,}3 \leq \frac{|f_2|}{f} \leq 0{,}36$$

und

$$1,6 \leq \frac{f_1}{|f_2|} \leq 2,0$$

worin bedeuten:

$f_1$ die Brennweite der ersten Linsenkomponente;
$f_2$ die Brennweite der zweiten Linsenkomponente; und
$f$ die Brennweite des optischen Systems.

8. Optisches System nach Anspruch 4, dadurch gekennzeichnet, daß

$$0,275 \leq \frac{|f_2|}{f} < 0,375 \text{ und } 1,5 \leq \frac{f_1}{f_3}$$

worin bedeuten:

$f_3$ die Brennweite der dritten Linsenkomponente;
$f_2$ die Brennweite der zweiten Linsenkomponente;
$f_1$ die Brennweite der ersten Linsenkomponente; und
$f$ die Brennweite des optischen Systems.

9. Optisches System nach Anspruch 1, dadurch gekennzeichnet, daß jede Linsenkomponente durch ein einziges Linsenelement gebildet ist.

10. Optisches System nach Anspruch 1, dadurch gekennzeichnet, daß die hintere Linsenkomponente ein Kitt-Duplet (L3a', L3b') ist.

11. Optisches System nach Anspruch 6, dadurch gekennzeichnet, daß

- die erste Linsenkomponente mit positiver Brechkraft eine positive Meniskuslinsenkomponente ist, deren dem Aufnahmegegenstand zugekehrte Linsenfläche konvex ausgebildet ist;
- die Linsenkomponente mit negativer Brechkraft ein Bikonkavlinsenelement ist; und
- die zweite Linsenkomponente mit positiver Brechkraft eine Bikonvexlinsenkomponente ist.

12. Optisches System nach Anspruch 2, dadurch gekennzeichnet, daß alle Linsenelemente aus Glas bestehen.

13. Fotografisches Gerät (50; 50') mit

a) einem optischen System (100; 200), das folgende Komponenten umfaßt:

- eine erste Linsenkomponente (L1; L1') mit einer ersten und zweiten Linsenfläche;
- eine zweite Linsenkomponente (L2; L2') mit einer ersten Fläche und einer zweiten Fläche, wobei die erste Fläche der zweiten Linsenkomponente eine freie Öffnung und die zweite Fläche der zweiten Linsenkomponente eine freie Öffnung aufweist, und wobei die erste Linsenfläche der zweiten Linsenkomponente in Kontakt mit der zweiten Linsenfläche der ersten Linsenkomponente angeordnet ist und die sich berührenden Linsenflächen gegeneinanderdrücken und bei über 0,0 mm und unter 2 mm über die freien Öffnungen der sich berührenden Linsenflächen hinaus einen Kantenkontakt (P1; P2) bilden;
- eine dritte Linsenkomponente (L3; L3a', L3b') mit einer ersten Fläche und einer zweiten Fläche, wobei die erste Fläche der dritten Linsenkomponente eine freie Öffnung und die zweite Fläche der dritten Linsenkomponente eine freie Öffnung aufweist, und wobei die zweite Linsenfläche der zweiten Linsenkomponente in Kontakt mit der ersten Linsenfläche der dritten Linsenkomponente angeordnet ist und die sich berührenden Linsenflächen gegeneinanderdrücken und bei über 0,0 mm und unter 2 mm über die freien Öffnungen der sich berührenden Linsenflächen hinaus einen Kantenkontakt (P3; P4) bilden, wobei die freie Öffnung die für die Erfüllung der beiden folgenden Bedingungen erforderliche Mindestöffnung (CA) an der entsprechenden Linsenfläche ist:

i) sie ist groß genug, um der erforderlichen Mindest-Blendenzahl zu genügen; und
ii) sie ist groß genug, um in den Ecken des Bildfeldes bei maximaler Bildfeldgröße die erforderliche Lichtmenge durchzulassen; und

b)einer Objektivfassung (4) für die Aufnahme der Linsenkomponenten in gegenseitiger Ausrichtung, wobei die Fassung ringförmige Flächenmittel (4a, 4b, 4c) zum Eingreifen in jede der Linsenkomponenten, ein erstes Druckelement (10, 10') zum Eingreifen in die vordere Fläche des ersten Linsenelements und Ausüben eines Drucks auf diese Fläche, und ein zweites Druckelement (20, 20') zum Eingreifen in die hintere Fläche des hinteren Linsenelements und Ausüben eines Drucks auf diese Fläche aufweist.

**Revendications**

1. Objectif (100 ; 200) comprenant :

   un premier composant externe convergent (L1 ; L1'),
   un second composant externe convergent (L3 ; L3a'-L3b'),
   un composant divergent (L2 ; L2') placé entre lesdits premier et second composants externes et espacé dc ceux-ci par de l'air, et
   un diaphragme (ST), ledit diaphragme étant situé du côté extérieur dudit second composant externe convergent, caractérisé en ce que les espaces d'air (d1, d2) entre lesdits composants et les vergences optiques et les courbures desdits composants d'objectif sont tels qu'il existe entre toutes les surfaces optiques adjacentes des composants adjacents un contact périphérique (P1, P2, P3, P4) situé uniquement en des points (P) situés à l'intérieur de la région s'étendant entre 0,0 mm à partir d'une position permettant d'éliminer suffisamment la lumière parasite et à environ 2 mm au-delà du diamètre d'ouverture libre de la surface du composant correspondant, où l'ouverture libre est l'ouverture nécessaire minimum (CA) sur la surface du composant qui satisfait à la fois les deux conditions suivantes : a) elle doit être suffisamment grande pour satisfaire le nombre d'ouverture $f$/No minimum exigé, et b) elle doit être suffisamment grande pour transmettre la quantité nécessaire de lumière dans les coins du champ à la couverture de champ maximum.

2. Objectif selon la revendication 1, dans lequel lesdits composants présentent des vergences et des espacements suffisants pour permettre audit objectif de couvrir un champ d'au moins 55 degrés, et l'espacement d'air entre l'un desdits composants externes convergents et ledit composant divergent est inférieur à l'épaisseur dudit composant externe convergent, et

   ledit objectif satisfait les paramètres suivants :

   $$20 \leq f \leq 30$$

   $$5 \leq BF \leq 24,85$$

   $$2 \leq f/No|_{min.} \leq 5,6,$$

   où $f$ est la distance focale de l'objectif, BF est le tirage arrière de l'objectif, et $f$/No$|_{min}$ est le nombre d'*ouverture* auquel l'objectif fonctionne à pleine ouverture.

3. Objectif selon la revendication 2 dans lequel :

   le premier composant externe (L1) est un ménisque présentant, du côté objet, une surface externe convexe,
   ledit composant divergent (L2) est biconcave,
   ledit second composant externe (L3) est biconvexe, et
   ledit diaphragme est disposé derrière le second composant situé le plus vers l'arrière de l'objectif, et dans lequel le système d'objectif satisfait les conditions suivantes :

$$N_3 - N_1 \leq 0,1$$

$$\frac{N_1}{N_2} \geq 0,9$$

$$0,25 \, f < \Sigma d < 0,35 \, f$$

où:

$f$ est la distance focale composite de l'objectif,
$\Sigma d$ est la distance depuis le sommet de la surface située le plus sur l'avant du premier composant jusqu'au sommet de la dernière surface du second composant,
$N_1$ représente l'indice de réfraction du premier composant convergent,
$N_2$ représente l'indice de réfraction du second composant divergent, et
$N_3$ représente l'indice de réfraction du second composant convergent.

4. Objectif selon l'une quelconque des revendications précédentes, dans lequel l'une des surfaces des composants et ledit diaphragme définissent deux positions de crans d'ouverture, ledit diaphragme étant positionné de façon à agir en tant que cran d'ouverture lors d'une condition de faible ouverture, lesdits composants ayant l'une de leurs surfaces positionnée et dimensionnée de façon à agir en tant que cran d'ouverture lorsque ledit diaphragme n'agit pas en tant que cran d'ouverture mais agit en tant qu'écran afin d'éliminer la propagation de lumière indésirable en direction du plan image dans une condition de pleine ouverture.

5. Objectif selon la revendication 3, dans lequel :

$$T_1 \geq 2 \, d_1$$

et

$$T_3 \geq 2 \, d_2$$

où :

$d_1$ est l'espace d'air entre la première et la seconde lentille,
$d_2$ est l'espace d'air entre la seconde et la troisième lentille,
$T_1$ est l'épaisseur de la première lentille, et
$T_3$ est l'épaisseur de la troisième lentille.

6. Objectif selon la revendication 3, dans lequel :

$$0,275 \leq \frac{|f_2|}{f} < 0,375 \text{ et } 1,5 \leq \frac{f_1}{f_3},$$

où :

$f_1$ représente la distance focale de la première lentille,
$f_2$ représente la distance focale de la seconde lentille,
$f_3$ représente la distance focale de la troisième lentille, et
$f$ est la distance focale de l'objectif.

7. Objectif selon la revendication 3, dans lequel :

$$0,3 \leq \frac{|f_2|}{f} \leq 0,36$$

et

$$1,6 \leq \frac{f_1}{|f_2|} \leq 2,0$$

où :

$f_1$ représente la distance focale de la première lentille,
$f_2$ représente la distance focale de la seconde lentille,
$f$ est la distance focale de l'objectif.

8. Objectif selon la revendication 4, dans lequel :

$$0,275 \leq \frac{|f_2|}{f} < 0,375 \text{ et } 1,5 \leq \frac{f_1}{f_3}$$

où :

$f_3$ représente la distance focale de la troisième lentille,
$f_2$ représente la distance focale de la seconde lentille,
$f_1$ représente la distance focale de la première lentille, et
$f$ est la distance focale du système d'objectif.

9. Objectif selon la revendication 1, dans lequel chaque composant est constitué par une seule lentille.

10. Objectif selon la revendication 1, dans lequel le composant postérieur est un doublet collé (L3a'-L3b').

11. Objectif selon la revendication 6, dans lequel :

ledit premier composant convergent optique est un ménisque convergent dans lequel sa surface convexe est du côté objet,
ledit composant divergent optique est une lentille biconcave, et
ledit second composant convergent est un biconvexe.

12. Objectif selon la revendication 2, dans lequel la totalité des lentilles sont des lentilles de verre.

13. Dispositif photographique (50 ; 50') comprenant :

a) un objectif (100 ; 200) comprenant :

un premier composant (L1 ; L1') présentant une première et une seconde surface de lentille,
un second composant (L2 ; L2') présentant une première surface et une seconde surface, ladite première surface du second composant présentant une première ouverture libre de surface, ladite seconde surface dudit second composant d'objectif présentant une seconde ouverture libre de surface, ladite première surface dudit second composant étant positionnée en contact avec ladite seconde surface dudit premier composant, lesdites surfaces en contact pressant l'une contre l'autre et formant un contact par le bord (P1-P2) à plus de 0,0 mm et à moins de 2 mm au-delà des ouvertures libres de surface desdites surfaces en contact,
un troisième composant (L3 ; L3a'-L3b') présentant une première surface et une seconde surface, ladite première surface du troisième composant présentant une première ouverture libre de surface, ladite seconde surface dudit troisième composant présentant une seconde ouverture libre de surface, ladite seconde surface dudit second composant étant positionnée en contact respectif avec ladite première surface dudit troisième composant, lesdites surfaces en contact respectives pressant l'une contre l'autre et formant un contact par le bord (P3-P4) à plus de 0,0 mm et moins de 2 mm au-delà des ouvertures libres de surface desdites surfaces en contact respectives, l'ouverture libre étant l'ouverture minimum nécessaire (CA), sur la surface correspondante du composant de l'objectif, exigée pour satisfaire à la fois les deux conditions suivantes :

i) elle doit être suffisamment grande pour satisfaire le nombre d'ouverture *f*/No minimum exigé, et
ii) elle doit être suffisamment grande pour transmettre la quantité exigée de lumière dans les coins du champ à la couverture de champ maximum,

et b) un barillet d'objectif (4) destiné à maintenir lesdits composants en alignement les uns par rapport aux autres, ledit barillet comprenant : des surfaces de forme annulaire (4a, 4b, 4c) destinées retenir chacun des composants, un premier élément de pression (10 ; 10') destiné à retenir la surface avant de la première lentille et à exercer une pression sur celle-ci, et un second élément de pression (20 ; 20') destiné à retenir la surface postérieure de la lentille postérieure et à exercer une pression sur celle-ci.

EP 0 657 038 B1

FIG. 1

FIG. 5

20

FIG. 2

FIG. 6

FIG.3a     FIG.3b     FIG.3c     FIG.3d

EP 0 657 038 B1

FIG. 4a

FIG. 4b

FIG. 4c

FIG. 4d

FIG. 12a

FIG. 12b

EP 0 657 038 B1

FIG. 11

FIG. 7

FIG. 8

24

FIG. 9

FIG. 10